# EUROPEAN PATENT SPECIFICATION

(11) **EP 1 300 615 B1**
(45) Date of publication and mention of the grant of the patent: **12.03.2008**
(21) Application number: 02726428.2
(22) Date of filing: 15.05.2002
(51) Int. Cl.: F16J 15/22

(54) **STRUCTURAL MATERIAL OF GLAND PACKING**
STRUKTURMATERIAL FÜR STOPFBÜCHSENPACKUNG
MATERIAU STRUCTUREL DE GARNITURE D'ETANCHEITE

(30) Priority: 17.05.2001 JP 2001147696
(43) Date of publication of application: 09.04.2003
(73) Proprietor: NIPPON PILLAR PACKING CO., LTD., Osaka-shi, Osaka 532-0022 (JP)
(72) Inventor: UEDA, Takahisa, Nippon Pillar Packing Co., Ltd., Sanda-shi, Hyogo 669-1333 (JP)
(74) Representative: Jenkins, Peter David
(86) International application number: PCT/JP2002/004720
(87) International publication number: WO 2002/095270

(56) References cited:
- GB-A- 2 255 141
- JP-A- 62 151 670
- JP-U- 59 098 161
- JP-U- 63 110 768
- US-A- 2 134 324
- US-A- 2 173 744
- US-A- 4 100 835
- US-A- 4 672 879
- PATENT ABSTRACTS OF JAPAN vol. 011, no. 380 (M-650), 11 December 1987 (1987-12-11) & JP 62 151670 A (NIPPON PILLAR PACKING CO LTD), 6 July 1987 (1987-07-06)

## Description

### Technical Field

The present invention relates to a braided cord used in a gland packing, which is a braided packing.

### Background Art

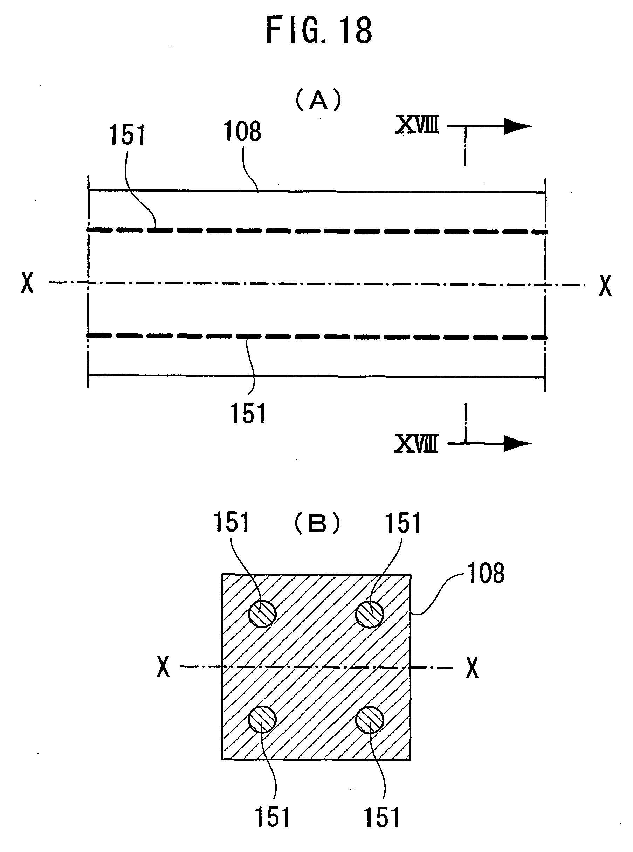

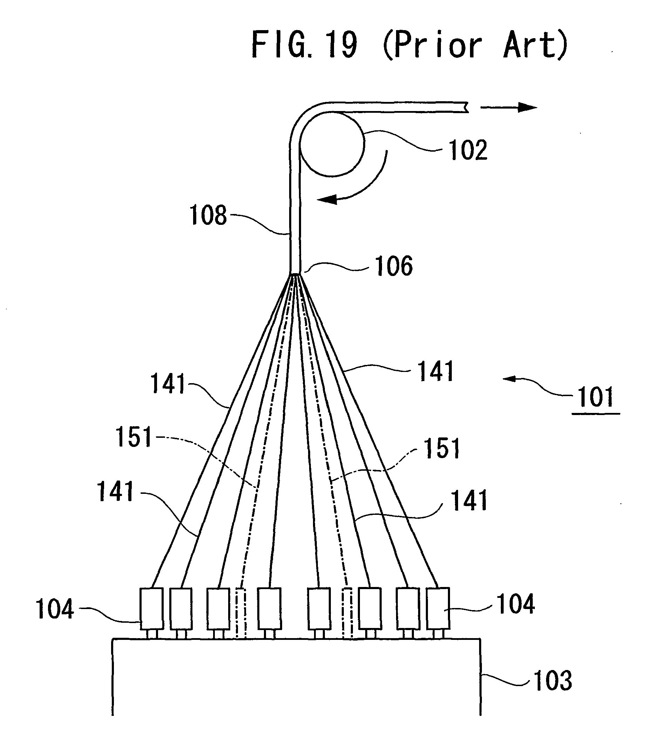

Fig. 19 illustrates a known conventional structural material for a gland packing, which is a braided cord 108 produced by an interlock braiding machine 101 that makes a linear interlocked braid. With this interlock braiding machine 101, guide knitting yarns 141 are guided from knitting yarn feeders 104 provided on a base 103 to a braiding point 106, and the knitting yarn feeders 104 are rotationally driven so that the knitting yarns 141 are moved over a specified knitting yarn path while being intertwined with each other, thereby creating the braided cord 108 that has a square cross sectional shape and is in the form of a linear interlocked braid, as shown in Fig. 18. The braided cord 108 is moved over a linear path, which extends from the braiding point 106, by a winding apparatus 102 provided above the braiding point 106.

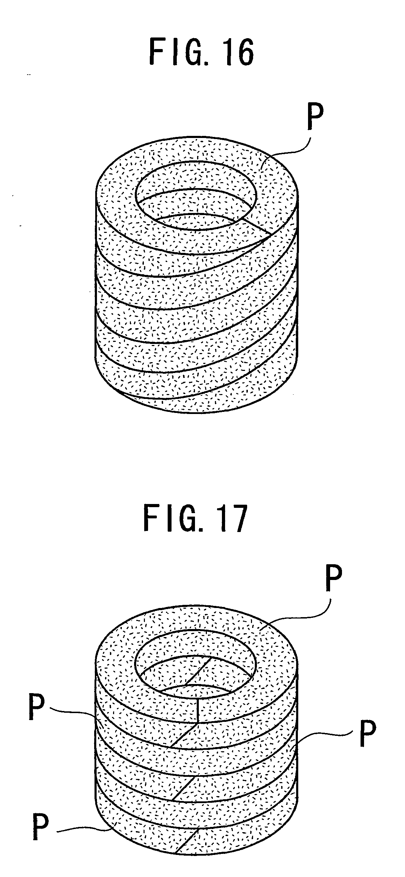

To obtain a gland packing, the braided cord 108 obtained as described above is cut to the specified length, after which it is installed in a stuffing box in a spirally deformed state as shown in Fig. 16, or the braided cord 108 that has been cut to the specified length is deformed into a ring shape and stacked in a stuffing box in a plurality of layers as shown in Fig. 17.

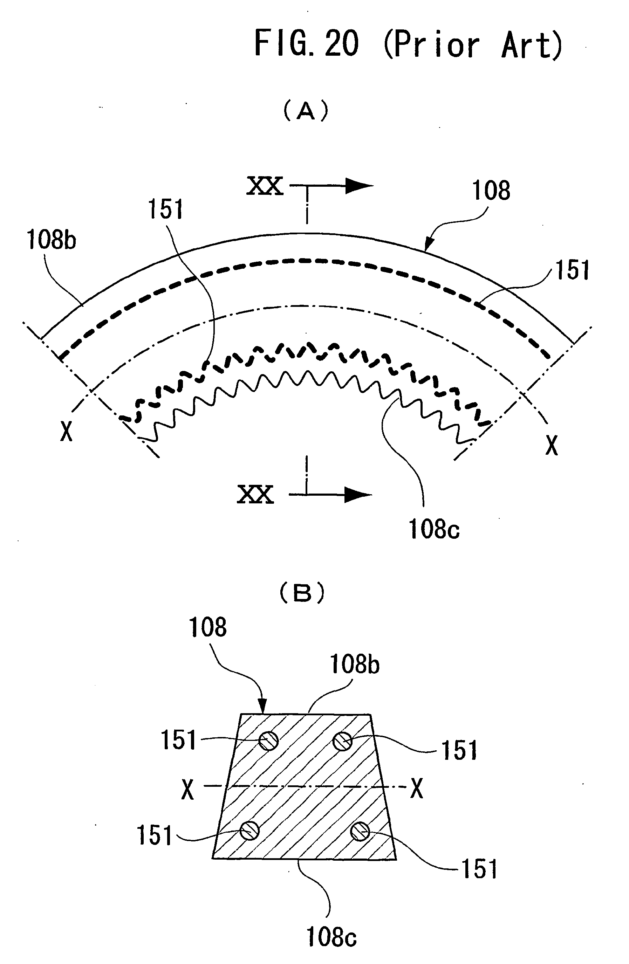

However, the conventional braided cord 108 is braided linearly as shown in Fig. 18(A). Accordingly, when it is spirally or annularly deformed, as shown in Fig. 20(A), a tensile force F acts in the axial direction on the outer peripheral surface 108b side of a reference plane X-X (a plane that is parallel to the inner and outer peripheral surfaces 108b and 108c and passes through the cross sectional center of the braided cord 108), and a compression force **f** acted on the inner peripheral surface 108c side of this plane. Consequently, the inner peripheral surface 108c is deformed in a crinkled fashion as shown in Fig. 20(A), resulting in nonuniform contact with the shaft member to be inserted. Furthermore, the action of the above-described tensile force F and compression force **f** results in uneven density distribution at the various cross sections, and the cross sectional shape deforms into a trapezoidal shape as shown in Fig. 20(B). Also, when the braided cord 108 is used as a structural material for a gland packing, as indicated by the dotted lines in Fig. 19, an attempt has been made at enhancing the elasticity (recoverability) of a gland packing by supplying elastic yarns 151 that have better elasticity than the knitting yarns 141 to the braiding point 106 so that they are not intertwined with the knitting yarns 141, and thereby disposing the elastic yarns 151 so that they pass through the braided layer constituted by the knitting yarns 141. However, the elastic yarns 151 disposed on the inner peripheral surface 108c side of the reference plane X-X are deformed in a wavy pattern as shown in Fig. 20(A) by the above-described compression force **f**, so that the improvement in elasticity is not effectively realized, and the density distribution becomes even less uniform.

Because of this, when a gland packing is produced using the conventional braided cord 108, good sealing performance is not achieved due to uneven contact with the sealing surface and so on. Also, the elasticity (recoverability) is not always adequate, resulting in that the tightening surface pressure of the packing retainer needs to be raised higher than necessary, and retightening work that increases the tightening surface pressure needs to be performed more often.

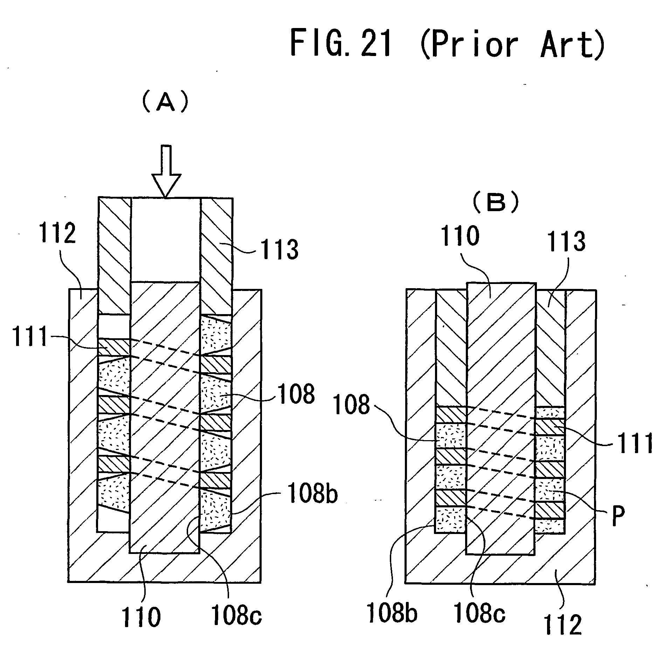

In an effort to solve this problem, it has been attempted that a suitable metal mold is used to press-mold the braided cord 108 into a spiral or annular shape and thereby restore the cross sectional shape and the inner peripheral surface shape to their proper forms. For instance, for a spiral gland packing P, as shown in Fig. 21(A), a braided cord 108 that has been cut to the specified length is wound in a spiral around a cylindrical core 110 with a spacer 111 (a spiral metal plate) interposed therebetween, these components 108, 110, and 111 are set inside a bottomed, cylindrical outer mold 112, and press molding is performed with a cylindrical die 113 as shown in Fig. 21(B). As a result, the cross sectional shape becomes appropriate square, and the surface of the inner periphery is restored to the form of a spiral cord having a smooth surface that is free of bumps.

With this type of molding, however, only the external appearance and shape of the gland packing can be corrected; and the deformation of the elastic yarns 151 or the unevenness of the density cannot be corrected. More specifically, when the braided cord 108 is spirally wound around the core 110, as discussed above, the cross sectional shape thereof deforms into a trapezoidal shape that is wider in the direction of the inner peripheral surface 108c because of the action of the compression force **f** on the inner peripheral surface 108c side and the action of the tensile force F on the outer peripheral surface 108b side (see Figs. 20(B) and 21(A)). In this state of deformation, the density on the inner peripheral surface 108c side subjected to the compression force **f** is higher than the density on the outer peripheral surface 108b side subjected to the tensile force F. Therefore, when this trapezoidal cross sectional shape is pressed back into a square shape (either square or rectangular) as shown in Fig. 21(B), the density on the inner peripheral surface 108c side becomes even higher, resulting in an even greater difference in density between the two peripheral surface sides as compared to before the press molding. Also, the bumps on the inner peripheral surface 108c are smoothed out by the press molding, but the density distribution on the inner peripheral surface 108c side does not become uniform, and the density distribution on the inner peripheral surface 108c side in the lengthwise direction of the braided cord 108 (the spiral packing P) becomes even less uniform. More specifically, the change in density caused by pressing and restoration differs between the convex and concave parts of the inner peripheral surface 108c, with the density becoming even higher at the convex parts after pressing and restoration, for instance, so that the density distribution becomes even less uniform on the inner peripheral surface 108c side. Furthermore, the deformation of the elastic yarns 151 on the inner peripheral surface side from the reference plane X-X (Fig. 20(A)) is not corrected by the press molding, and the degree of deformation actually increases.

As seen from the above, the performance problems described above in regard to a gland packing are not resolved by performing molding with a metal mold (press molding). Moreover, subjecting the braided cord 108 to this metal mold molding is extremely disadvantageous in terms of the cost of producing a gland packing because the gland packing cannot be obtained easily and inexpensively.

JP-A-62151670 discloses an elastic packing composed of a grating knitting structure formed by knitting yarns and a plurality of elastomers disposed along the longitudinal direction of the grating knitting structure in all gaps between respective knitting yarns.

### Disclosure of the Invention

It is an object of the present invention to provide an extremely practical structural material for a gland packing, with which the above problems are not encountered, which can be used favorably as a gland packing in a spiral or annular form, which exhibits outstanding sealing performance, and which remains maintenance-free over an extended period due to its high recovery force.

In order to accomplish the above-described object, the present invention provides a gland packing structural material, comprising a spirally wound braided cord, said braided cord comprising a plurality of knitting yarns and elastic yarns, wherein said elastic yarns that have higher elasticity than said knitting yarns and extend in a lengthwise direction of said braided cord without being intertwined with said knitting yarns are disposed in a penetrating fashion: inside only an outer a braid layer portion of said braided cord, said outer braid layer portion being on an outer peripheral surface side of a reference plane (X-X) that passes through a cross sectional center of said braided cord and is parallel to inner and outer peripheral surfaces of said braided cord; inside both the outer braid layer portion and an inner braid layer portion on an inner peripheral surface side of the reference plane (X-X), but with lower surface density in the inner braid layer portion; or inside both the outer braid layer portion and the inner braid layer portion with the same surface density but with the elastic yarns in the inner braid layer portion having a lower elastic force than those in the outer broad layer portion, wherein the outer braid layer portion has a higher elastic force than the inner braid layer portion.

In this spiral braided cord that is the structural material for a gland packing, a plurality of elastic yarns (having higher elasticity than the knitting yarns) are disposed in the outer peripheral layer portion. In this case, the plurality of elastic yarns are preferably disposed in a cross section of the braided cord in an aligned state parallel to the outer peripheral surface of the braided cord. It is also possible for the elastic yarn group disposed in the cross section of the braided cord in an aligned state parallel to the outer peripheral surface of the braided cord to be disposed in a plurality of levels in the direction perpendicular to the inner and outer peripheral surfaces of the braided cord. Also, if needed, high-elasticity elastic yarns can be disposed also on the reference plane that includes the cross sectional center and/or in the braid layer portion that is on the inner peripheral surface side of the reference plane (such portion being hereinafter referred to as an "inner peripheral layer portion"). Further, the number of yarns thus disposed can be set as appropriate.

Also, the braided cord can take a square cross sectional shape including an interlocked braid structure that has a square cross section. In such a case, core yarns that extend in the lengthwise direction of the braided cord without being intertwined with the knitting yarns can be disposed in a penetration fashion in the corners of such a square shape braided cord. In this case, the core yarns can be the one that has a higher elasticity than the knitting yarns, just like the elastic yarns.

It is also possible for the braided cord to include a continuous spirally braided cord of different diameters. With this structure, it is possible to obtain a number of different types of gland packing that can be used for different shaft diameters from a single braided cord. Generally, a gland packing needs to have a different cross sectional area for each specific shaft diameter range. For example, for larger diameter shafts, packing that have a larger cross sectional area are required. It is, therefore, preferable for the above-described spiral braided cord to have a cross sectional area that corresponds to such different diameters.

The spiral braided cord can be easily obtained using a known knitting machine (such as an interlock knitting machine) by way of suitable adaptation of the method or apparatus for winding from the braiding point. For instance, a spiral braided cord is obtained by braiding a plurality of knitting yarns at a specific braiding point and rotating the braided portion produced at this braiding point in a specific direction and winding it around a spool shaft that moves axially in a specific direction. In this case, elastic yarns that are not intertwined with the knitting yarns are supplied to the braiding point in addition to the knitting yarns (core yarns are also supplied as needed). Also, with the use of a spool shaft in which a plurality of spool shaft sections of different outside diameters are arranged longitudinally, it is possible to obtain a braided cord that has a plurality of continuous spiral braided cord portions of different cross sectional areas and diameters. In addition, in order to give the braided cord a more precise cross sectional shape, it is preferable that flanges in a spiral form be provided so as to protrude from the outer peripheral surface of the spool shaft, so that when the braided cord is wound, the cord will be sandwiched between the flanges. In this case, it is preferable that the flanges are divided into a plurality of sections and removable from the outer peripheral surface of the spool shaft. Particularly when the knitting machine used is one that produces a braided cord with a square cross section, it is preferable for the spool shaft to have a square thread shape having flanges of a square cross section.

### Brief Description of the Drawings

Fig. 1 is a partially cutaway perspective view of a spiral braided cord that is the gland packing structural material according to the present invention.
Fig. 2 is an enlarged detailed view of the main portion of the cord in Fig. 1.
Fig. 3 is a side view of an example of a knitting machine for manufacturing the structural material of the present invention.
Fig. 4 is a side view of the knitting machine, illustrating a different action state from that in Fig. 3.
Fig. 5 is a vertical front cross sectional view taken along the line V-V in Fig. 3.
Fig. 6 is a cross sectional view taken along the line VI-VI in Fig. 5, illustrating a model of the knitting yarn path at the braiding point.
Fig. 7 is an enlarged detailed view of the main portion of Fig. 3(B), being a side view illustrating the state in which the braided cord has been wound on the spool shaft.
Fig. 8 is an enlarged detailed view of the main portion of that shown in Fig. 5.
Fig. 9(A) is a cross sectional view of the braided cord (taken along the line IX-IX in Fig. 8); and Fig. 9(B) is a cross sectional view that corresponds to Fig. 9(A), illustrating the braid configuration without elastic yarns.
Fig. 10 is a cross sectional view of a variation example of the braided cord, corresponding to Fig. 6.
Fig. 11 is a cross sectional view of another variation example of the braided cord, corresponding to Fig. 6.
Fig. 12 is a partially cutaway side view of a variation example of the spool shaft.
Fig. 13 is a vertical front cross sectional view taken along the line XIII-XIII in Fig. 12.
Fig. 14 is a partially cutaway side view illustrating the state when the braided cord has been wound on the spool shaft shown in Fig. 12.
Fig. 15 is another variation example of the braided cord, being a partially cutaway side view illustrating the state when the braided cord has been wound on the spool shaft.
Fig. 16 is a perspective view showing a use configuration of a gland packing.
Fig. 17 is a perspective view showing a use configuration of a different gland packing from that in Fig. 16.
Fig. 18(A) is a front view of the main portion of a conventional braided cord, and Fig. 18(B) is a cross sectional view taken along the line XVIII-XVIII in 18(A).
Fig. 19 is a front view of an example of a knitting machine for manufacturing a conventional braided cord.
Fig. 20(A) is a front view of the main portion of a conventional braided cord that is bent, and Fig. 20(B) is a cross sectional view taken along the line XX-XX in Fig. 20(A).
Fig. 21 is a side view of the process shown in cross section when a conventional braided cord is molded in a metal mold into a spiral gland packing.

### Best Mode for Carrying Out the Invention

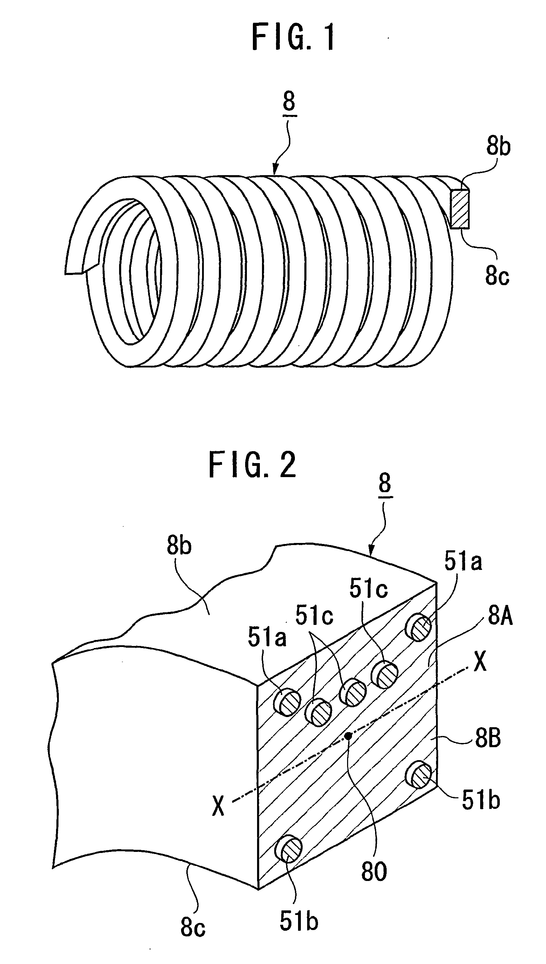

Embodiments of the present invention will now be described concretely with reference to Figs. 1 to 17.

As shown in Figs. 1, 2, 6, 8, and 9(A), the gland packing structural material according to one embodiment of the present invention is a braided cord 8 that has a square cross section and is spirally braided using a plurality of knitting yarns 41. A plurality of elastic yarns 51cc that extend in the lengthwise direction of the braided cord 8 without being intertwined with the knitting yarns 41 are disposed, in a penetration fashion, in a braid layer portion (outer peripheral layer portion) 8A that is on the outer peripheral surface 8b side of a reference plane X-X that passes through the cross sectional center 80 of the braided cord 8 and is parallel to the inner and outer peripheral surfaces 8b and 8c of the braided cord 8. In addition, two core yarns 51a and two core yarns 51b, which extend in the lengthwise direction of the braided cord 8 without being intertwined with the knitting yarns 41, are respectively disposed, in a penetrating fashion, in the corners of the outer peripheral layer portion 8A and in the corners of a braid layer portion (inner peripheral layer portion) 8B which is on the inner peripheral surface 8c side of the reference plane X-X.

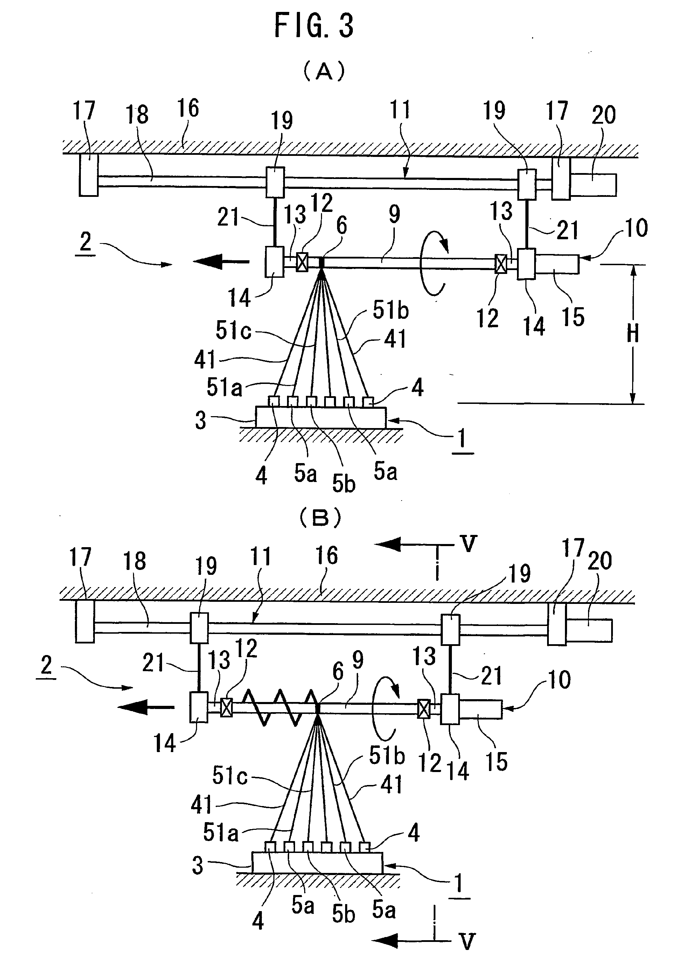

This braided cord 8 is manufactured by, for example, a knitting machine that includes a known braiding apparatus 1 and a special winding apparatus 2, as shown in Figs. 3 to 5.

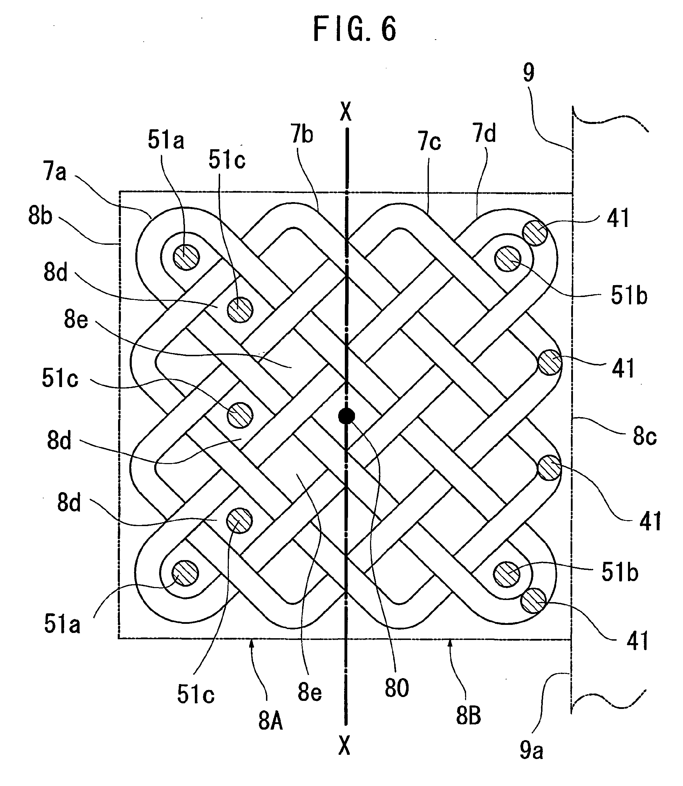

More specifically, as shown in Figs. 3 to 5, the braiding apparatus 1 has the same structure and function as the known interlock knitting machine 101 described above (except for the winding apparatus). More specifically, a plurality of knitting yarn feeders 4 (only some of which are shown) are movably provided on a machine base 3, and a plurality of core yarn feeders 5a (only some of which are shown) and elastic yarn feeders 5b (only some of which are shown) are fixed on this machine base 3. The knitting yarns 41 fed out from the knitting yarn feeders 4, the core yarns 51a and 51b fed out from the core yarn feeders 5a, and the elastic yarns 51c fed out from the elastic yarn feeders 5b are all guided to a braiding point 6 which is provided directly above the machine base 3. The knitting yarn feeders 4 are rotated by a drive mechanism (not shown) installed in the machine base 3 so that the knitting yarns 41 will cross over each other on a specific knitting yarn path 7. As a result, a braided cord 8, which has a square cross section and in which the core yarns 51a and 51b and the elastic yarns 51c are not intertwined with the knitting yarns 41 at a specific location of the braided layer portions 8A and 8B made up of the knitting yarns 41, is obtained. The cross sectional shape of the braided cord 8 obtained with this interlock knitting machine 101 is generally determined by the number N of knitting yarns or the number M of knitting yarn - paths, with M and N being in a relationship of N = 2M² + 2M- 4. In the shown embodiment, M = 4 and N = 36; and as shown in Fig. 6, 36 knitting yarns 41 (only some of which are shown) are moved over first to fourth knitting yarn paths 7a, 7b, 7c, and 7d, thus successively forming braided portions 8a with a square cross section at the braiding point 6, and yielding the braided cord 8 in which the braided portion 8a is continuous. As shown in Fig. 6, the core yarns 51a and 51b are guided from the core yarn feeders 5a to the braiding point 6 so as to pass through the voids in the corners of the first and fourth knitting yarn paths 7a and 7d that constitute the corners of the braided cord 8. In the meantime, when M = 4, as shown in Fig. 6, three outer peripheral surface-side voids 8d and two reference plane-side voids 8e are formed on the outer peripheral surface 8b side of the reference plane X-X between the intertwined portions of the outer knitting yarn paths 7a, 7b, 7c, and 7d. However, in the shown embodiment, three elastic yarns 51c are guided, so as to pass through the outer peripheral surface-side voids 8d, from the elastic yarn feeders 5b to the braiding point 6. As a result, these elastic yarns are disposed in an aligned state and parallel to the outer peripheral surface 8b in the outer peripheral layer portion 8A.

The knitting yarns 41 can be all of the same type or of different types, according to the intended application and usage conditions of the braided cord 8 (gland packing). Examples include aramid fibers, polytetrafluoroethylene (PTFE) fibers, carbon fibers, carbide fibers, and other such organic and inorganic fibers. Examples further include yarns made from expanded graphite (that is, yarns produced by cutting an expanded graphite sheet into a slender strip (5 mm or less, for instance), stacking a plurality of these strips, and then covering the surface thereof with aramid fibers or the like by a braid-over-braid or knit process). For the elastic yarns 51c, those that have better elasticity than the knitting yarns 41 are used (when a plurality of knitting yarns 41 of different materials are used, that which is superior in elasticity to a knitting yarn that has the highest elasticity should be used for the elastic yarns); and thus, glass fibers, carbon fibers (when the knitting yarns 41 are pitch-based carbon fibers with low elasticity), ceramic fibers, or other organic or inorganic fibers, or rubber yarns or the like are used for the elastic yarns 51c. The core yarns 51a and 51b are used in order to maintain the corner shape of the braided cord 8; and those having high elasticity, like that of the elastic yarns 51c, can be used if needed. In the shown embodiment, the knitting yarns 41 of all the same material are used, and high-elasticity yarns made of the same material as the elastic yarns 51c are used for the core yarns 51a and 51b.

As seen from Figs. 3 to 5, the winding apparatus 2 is comprised of a spool shaft 9 that as a uniform circular cross section, a rotation mechanism 10 for rotationally driving the spool shaft 9, and a feed mechanism 11 for moving the spool shaft 9 in the axial direction (making an axial movement).

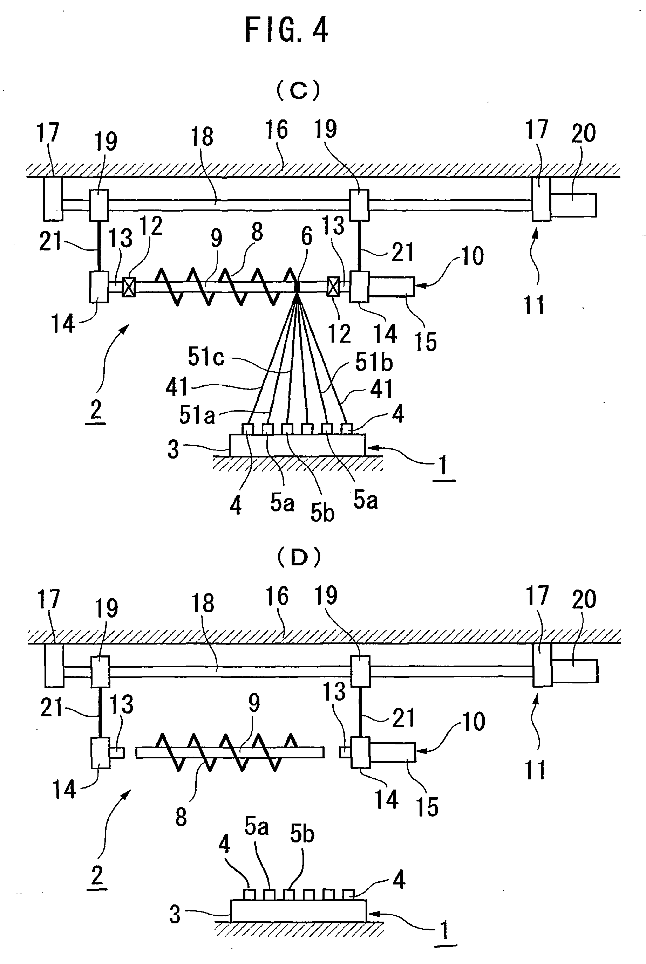

As shown in Figs. 3 and 4, the rotation mechanism 10 comprises a pair of support shafts 13, bearings 14 and a drive motor 15. The support shafts 13 are coupled together concentrically via couplers 12 that are detachably provided to the ends of the spool shaft 9. The bearings 14 rotatably support the support shafts 13. The drive motor 15, equipped with a transmission mechanism, is coupled at its motor output shaft to one of the support shafts 13 so as to rotationally drive the spool shaft 9 in a specific direction (indicated by the arrow). As shown also in Figs. 3 and 4, the feed mechanism 11 comprises a threaded shaft 18, a pair of female threaded tubes 19 and a feed motor 20. The threaded shaft 18 is supported by bearing supports 17 on an apparatus frame 16 so as to be located above the braiding apparatus 1. The female threaded tubes 19 are threaded onto the threaded shaft 18. The feed motor 20, equipped with a transmission mechanism, is to rotationally drive the threaded shaft 18 forward and backward. When the threaded shaft 18 is driven forward or backward by the feed motor 20, the female threaded tubes 19 are screw-fed in the axial direction while keeping a specific distance in between.

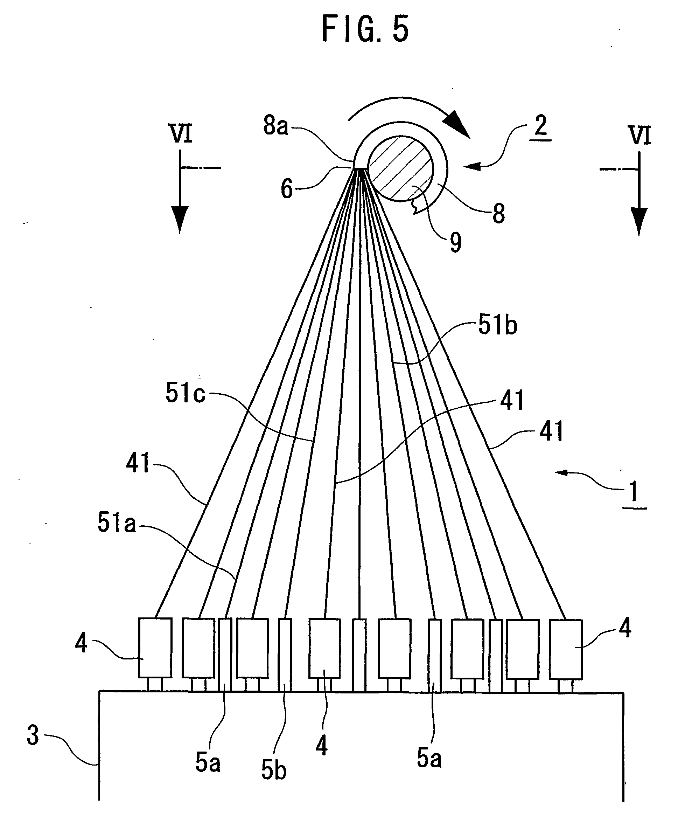

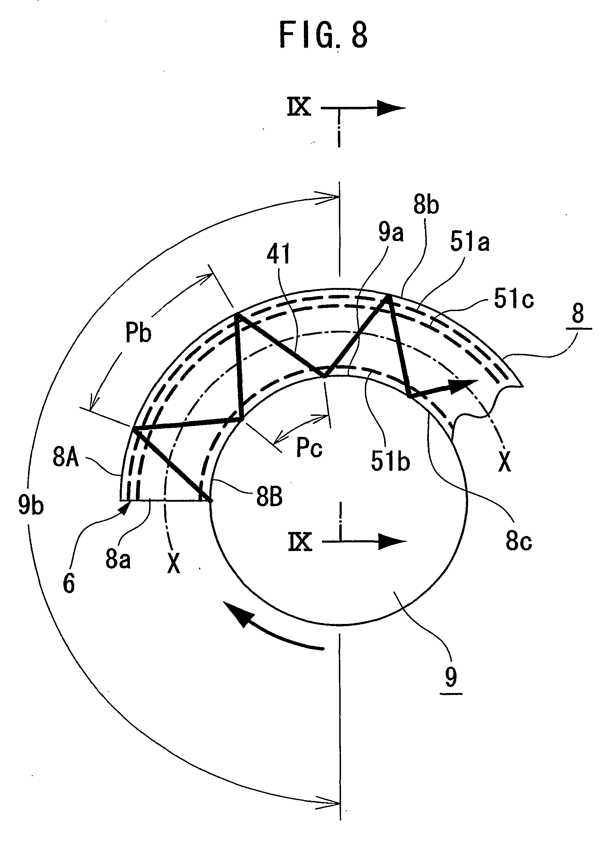

As shown in Figs. 3 and 4, the bearings 14 are linked to the female threaded tubes 19 via linking arms 21; as a result, the spool shaft 9 is supported so as to be capable of rotating and axially movable in the horizontal state with the braiding point 6 being located on the outer peripheral surface 9a thereof. The relative positional relationship between the spool shaft 9 and the braiding point 6 is shown in Figs. 5 and 6, in which one side surface of the braided portion 8a being braided at the braiding point 6 (the surface on which the inner peripheral surface 8c of the braided cord 8 is formed) is set so as to come into contact at a suitable place in a portion 9b (see Fig. 8) of the outer peripheral surface 9a of the spool shaft 9 that is moved up when the spool shaft 9 is rotated and at a place that will not interfere with the braiding action of the braiding point 6 (in the shown embodiment, this place is located in or near the horizontal plane passing through the center of the spool shaft 9). The vertical spacing between the bearings 14 and the female threaded tubes 19 is set so as to be varied as desired by way of elevatably linking the bearings 14 or the female threaded tubes 19 to the linking arms 21 or by way of giving the linking arms 21 a structure that affords vertical extension and retraction (such as a pneumatic cylinder), for example. When the vertical spacing between the-bearings 14 and the female threaded tubes 19 is thus changed, the distance H (see Fig. 3(A)) from the knitting yarn feeders to the braiding point 6 is properly adjusted so as to meet the braiding conditions. The outer peripheral surface 9a of the spool shaft 9 is subjected to some kind of working that will produce sufficient frictional engagement force between itself and the inner peripheral surface 8c of the braided cord 8 so that the braided cord 8 will be wound properly on the spool shaft 9. For example, fine protrusions such as needles can be produced around the outer peripheral surface 9a, or this surface can be coated with a high friction material.

With the structure described above, the spool shaft 9 is moved horizontally in the axial direction by rotationally driving the threaded shaft 18 forward in a state in which the above-described relative positional relationship with the braiding point 6 is maintained. In other words, when the threaded shaft 18 is rotationally driven forward, the spool shaft 9 is, via the female threaded tubes 19 (and the couplers 12, support shafts 13, bearings 14, and linking arms 21), moved horizontally (in the axial direction) at a constant speed from a winding start position at which the braiding point 6 is located at the starting end of the spool shaft 9 (the position shown in Fig. 3(A)) to a winding end position at which the braiding point 6 is located at the finishing end of the spool shaft 9 (the position shown in Fig. 3(B)). The spool shaft 9 can be returned to the winding start position by reversing the drive of when the threaded shaft 18.

The rotational speed (winding rate) and axial movement speed (feed rate) of the spool shaft 9 can be properly set as dictated by the movement speed of the knitting yarns 41 over the knitting yarn paths 7 and other such factors by means of the transmissions of the motors 15 and 20.

The braided cord 8 is braided as described below by using a braider that is comprised of the above-described braiding apparatus 1 and winding apparatus 2.

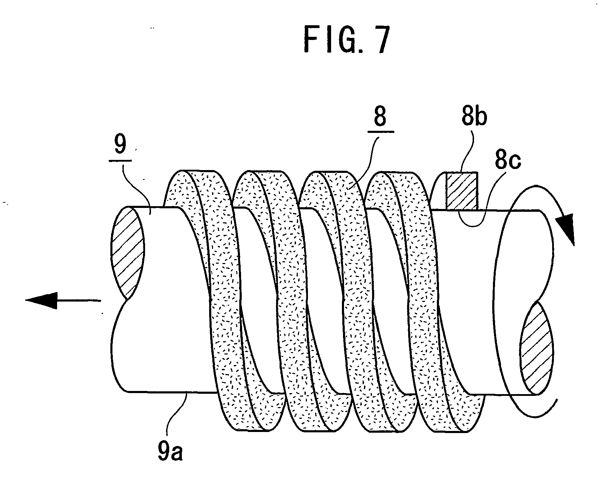

With the spool shaft 9 being located at the winding start position, the spool shaft 9 is rotationally driven and the braiding action is commenced by the braiding apparatus 1 (Fig. 3(A)). The threaded shaft 18 is then driven forward, which moves the spool shaft 9 at a constant speed from the winding start position to the winding end position, whereupon the braided portion 8a is successively formed at the braiding point 6, and this portion is wounded onto the spool shaft 9 by being forcibly fed over a spiral path extending from the braiding point 6 (Fig. 3(B) and Fig. 5). In other words, as shown in Fig. 7, the braided cord 8 obtained by continuously forming the braided portion 8a is wound spirally around the outer peripheral surface 9a of the spool shaft 9. When the spool shaft 9 reaches the winding end position and the braided cord 8 is wound in a spiral fashion over the portion from one end of the spool shaft 9 to the other (Fig. 4(C)), the both apparatuses 1 and 2 are halted for the operation, and the spool shaft 9 is removed from the winding apparatus 2 (Fig. 4(D)) by way of manipulating the couplers 12. After this, the spool shaft 9 is pulled out of the braided cord 8 wound around the spool shaft 9, and thus the spiral braided cord 8 as shown in Fig. 1 is obtained.

When the braided cord 8 produced at the braiding point 6 is thus wound in a spiral on the spool shaft 9 while the braided portion 8a is successively produced, the braided portion 8a is always formed at the braiding point 6 in an arc shape that has an inside diameter which corresponds to the outer peripheral surface 9a of the spool shaft 9. More specifically, the knitting yarns 41 are intertwined with one another while being folded over at the inner and outer peripheral surfaces 8b and 8c; but since the take-up rate of the knitting yarns 41 by the spool shaft 9 is different on the outer peripheral surface 8b side and the inner peripheral surface 8c side in the braided cord 8 or the braided portion 8a, as shown in Fig. 8, the fold-over pitch Pb on the outer peripheral surface 8b side is greater than the fold-over pitch Pc on the inner peripheral surface 8c side. As a result, the braided portion 8a is successively formed in an arc shape at the braiding point 6, producing the braided cord 8 that extends in a spiral on the outer peripheral surface 9a of the spool shaft 9. Therefore, there is no strain in the inner and outer peripheral surfaces 8b and 8c, forming smooth curved surfaces. The core yarns 51a and 51b and the elastic yarns 51c provided inside the braided cord 8 so as to pass through in a penetrating fashion in the braided cord 8 in its lengthwise direction also extend spirally along the inner and outer peripheral surfaces 8b and 8c without any undulations as shown in Fig. 8.

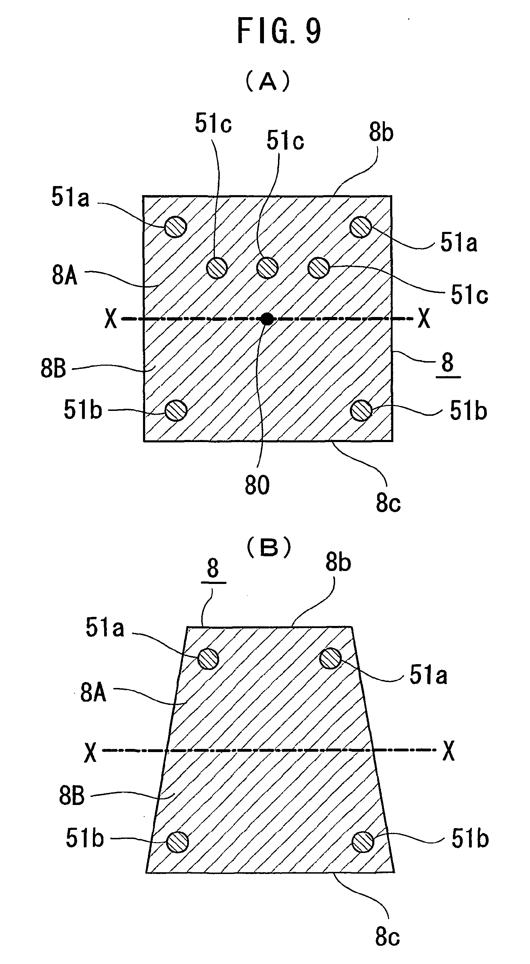

Because the fold-over pitch Pb is greater on the outer peripheral surface 8b side as described above, the mesh is not as fine as on the inner peripheral surface 8c. Consequently, the effect of the tension acting on the knitting yarns 41 is that the cross sectional shape tends to become trapezoidal, with the outer peripheral surface 8b side being narrower, as shown in Fig. 9(B).

However, since the elastic yarns 51c, which are not present in the inner peripheral layer portion 8B, are provided in the outer peripheral layer portion 8A, the outer peripheral surface 8b side is prevented from constricting by the presence of these elastic yarns 51c. As a result, the cross sectional shape is substantially perfectly square as shown in Fig. 9(A). The braiding density and elastic force (recovery force) of the outer peripheral layer portion 8A, in which the mesh is coarser, also become equal to those in the inner peripheral layer portion 8B due to the presence of the elastic yarns 51c. As a result, the overall recovery force of the braided cord 8 enhanced, and the density distribution becomes more uniform.

By way of by cutting the above-described braided cord 8 to a suitable length, the gland packing P shown in Figs. 16 and 17 is easily obtained, and such a packing is obtained without performing the metal-mold molding discussed above. In the gland packing P obtained from the braided cord 8 spirally braided as described above, the density distribution and shape of the various cross sections are constant, the inner and outer peripheral surfaces 8b and 8c are smoothly curving, and the elastic yarns 51c (and the core yarns 51a and 51b), which are elastic materials, are disposed in a suitably curved shape that is not deformed and is parallel to the inner and outer peripheral surfaces 8b and 8c. Accordingly, such a gland packing can be installed densely in a stuffing box, and good sealing performance can be achieved without having to increase the tightening surface pressure provided by the packing retainer more than necessary. Also, the presence of the elastic yarns 51c (and the core yarns 51a and 51b), which are elastic materials, effectively increases the elastic performance (recovery force) of the packing P, and thus the packing remains maintenance-free over an extended period without requiring complicated retightening work.

The inside diameter of the braided cord 8 is determined by the diameter of the outer peripheral surface 9a of the spool shaft 9 (shaft diameter). Therefore, the diameter of the spool shaft 9 must be set according to the inside diameter of the gland packing P for which the braided cord 8 is to be used as a structural material. Even if the spirally braided cord 8 is deformed (widened or narrowed in diameter) in order to change its inside diameter, as long as this deformation stays within a certain range, the above-described performance and effect will not be lost. Therefore, the braided cord 8 can be favorably used in a wide range of gland packings of different inside diameters within the above-described range.

The present invention is not limited to the embodiments given above, and it can be improved or changed as needed to the extent that the basic principle of the present invention is not exceeded.

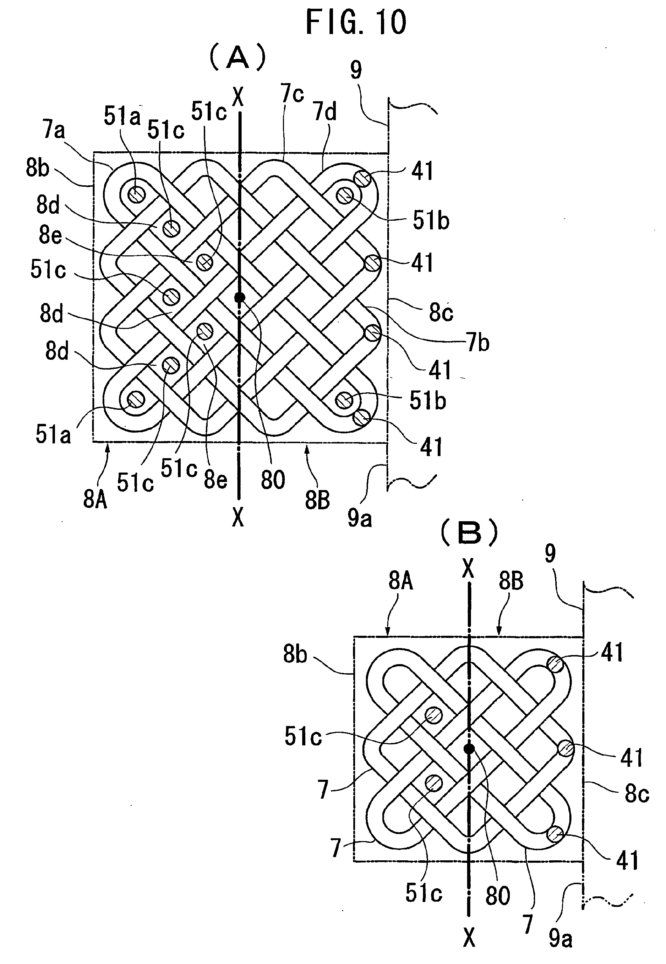

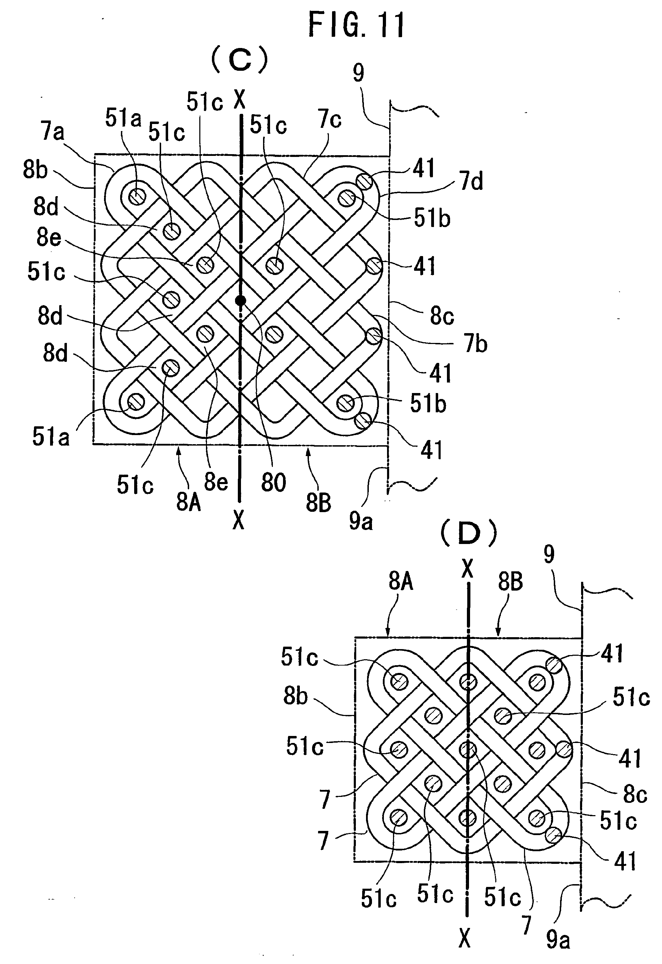

For instance, the number of elastic yarns 51c used and the disposition locations of elastic yarns 51c in the outer peripheral layer portion 8A can be varied; and the elastic yarns 51c can be provided not only in the outer peripheral surface-side voids 8d but also in the reference plane-side voids 8e as shown in Fig. 10(A). In other words, the elastic yarns 51c disposed in an aligned state so as to be parallel to the outer peripheral surface 8b in a cross section of the braided cord 8 can be disposed in a plurality of levels in the direction perpendicular to the outer peripheral surface 8b. The core yarns 51a and 51b can be used as needed; and as shown in Fig. 10(B), for example, the core yarns 51a and 51b need not be provided. Also, rather than being disposed just in the outer peripheral layer portion 8A as shown in Figs. 6 and 10(A) and 10(B), the elastic yarns 51c can also be disposed on the reference plane X-X and/or in the inner peripheral layer portion 8B as shown in Fig. 11(C) and 11(D), according to the conditions under which the gland packing will be used, and the conditions under which the braided cord 8 is braided (such as the material and thickness of the knitting yarns). Fig. 11(D) illustrates an example in which the elastic yarns 51c disposed in the corners function as core yarns as well; and likewise, in the structures shown in Figs. 6 and 10(A), yarns that arc as highly clastic as the elastic yarns 51c can be used as the core yarns 51a and 51b. However, when the elastic yarns 51c (including those that function as the core yarns 51b) are disposed on the reference plane X-X and/or in the inner peripheral layer portion 8B, it is preferable to set the disposition locations and number of locations of the elastic yarns 51c so that the cross sectional shape of the braided cord 8 will be substantially perfectly square (and so as not to hamper the increase in overall recovery force of the braided cord 8 or the improvement in density distribution uniformity).

Further, the properties (material, thickness, etc.) of the elastic yarns 51c (including those that function as the core yarns 51a and 51b) may vary in accordance with the location where the elastic yarns 51c are disposed. For instance, the elastic yarns 51c disposed in the outer peripheral layer portion 8A can have higher elastic force than the elastic yarns 51c disposed in the inner peripheral layer portion 8B.

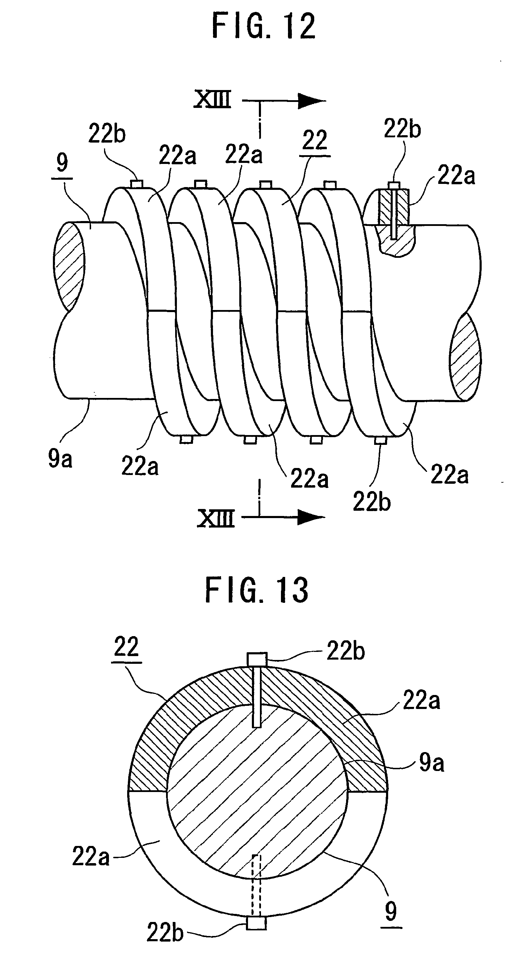

Also, as shown in Figs. 12 to 14, spiral flanges 22 can be provided so as to protrude from the outer peripheral surface 9a of the spool shaft 9, so that when the braided cord 8 is wound it will be sandwiched between the flanges 22. This effectively prevents the deformation of the cross sectional shape of the braided cord 8 during winding thereof and allows a braided cord 8 having a uniform cross section to be braided more reliably. In particular, when the braid structure has a square or otherwise polygonal cross sectional shape, such as the above-described interlocked braided cord 8 (having a square cross section), then a braided cord 8 having the proper square cross section can be reliably obtained by giving the flanges 22 a square cross sectional shape and giving the spool shaft 9 a square thread shape. When these flanges 22 are provided, in order to make it easier for the wound braided cord 8 to be removed from the spool shaft 9, it is preferable, as shown in Figs. 12 to 14, to divide the flanges 22 into a plurality of sections 22a and to removably fix these sections 22a to the outer peripheral surface 9a of the spool shaft 9 with bolts 22b or the like.

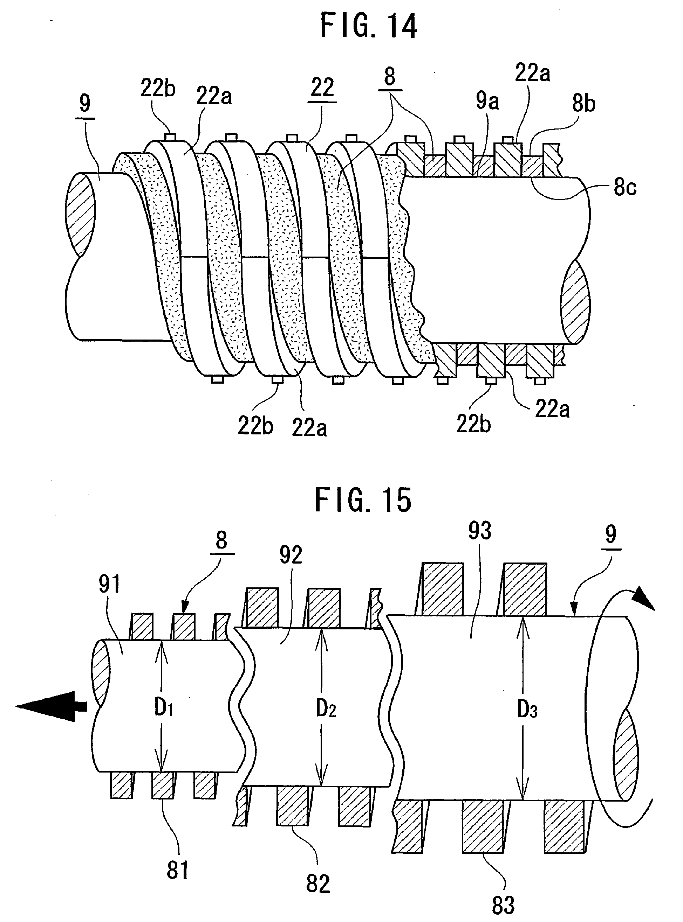

Furthermore, as shown in Fig. 15, the spool shaft 9 can be designed so that a plurality of spool shaft sections 91, 92, and 93 of different outside diameters are arranged longitudinally in the axial direction. This allows spirally braided cord sections 81, 82 and 83 with diameters D₁, D₂ and D₃ (D₁ < D₂ < D₃) to be continuously fabricated. In other words, a braided cord 8 that comprises spirally braided cord sections 81, 82 and 83 with different diameters can be obtained, allowing a plurality of types of gland packing of different diameters to be created from a single braided cord 8. In this case, it is preferable for the spirally braided cord sections 81, 82 and 83 to be braided into cross sectional areas that correspond to these diameters by using knitting yarns whose, for instance, thickness varies in steps at regular intervals. Even when a spool shaft 9 such as this is used, it is still possible to provide something corresponding to the above-described flanges 22 protruding from the outer peripheral surfaces of the spool shaft sections 91, 92 and 93.

## Claims

1. A gland packing structural material, comprising a spirally wound braided cord (8), said braided cord (8) comprising a plurality of knitting yarns (41) and elastic yarns (51c), wherein said elastic yarns (51c) that have higher elasticity than said knitting yarns (41) and extend in a lengthwise direction of said braided cord (8) without being intertwined with said knitting yarns (41) are disposed in a penetrating fashion: either inside only an outer braid layer portion (8A) of said braided cord (8), said outer braid layer portion (8A) being on an outer peripheral surface side of a reference plane (X-X) that passes through a cross sectional center of said braided cord (8) and is parallel to inner (8b) and outer (8c) peripheral surfaces of said braided cord (8); or inside both the outer braid layer portion (8A) and an inner braid layer portion (8B) on an inner peripheral surface side of the reference plane (X-X), but with lower surface density in the inner braid layer portion (8B); or inside both the outer braid layer portion (8A) and the inner braid layer portion (8B) with the same surface density but with the elastic yarns (51c) in the inner braid layer portion (8B) having a lower elastic force than those in the outer broad layer portion (8A),
wherein the outer braid layer portion (8A) has a higher elastic force than the inner braid layer portion (8B).

2. The gland packing structural material according to claim 1, wherein said plurality of elastic yarns (51c) are embedded inside said braided cord (8) so as to be aligned parallel to an outer peripheral surface (8c) of said braided cord (8).

3. The gland packing structural material according to claim 2, wherein a plurality of elastic yarn groups, each comprising a plurality of elastic yarns (51c) disposed in said braided cord (8) so as to be aligned parallel to said outer peripheral surface (8c) of said braided cord (8), are disposed in a plurality of levels in a direction perpendicular to said outer peripheral surface (8c).

4. The gland packing structural material according to claim 1, 2 or 3, wherein a cross-sectional shape of said braided cord (8) is square and elastic yarns (51a,51b) that extend in said lengthwise direction of said braided cord (8) without being intertwined with said knitting yarns (41) are disposed so as to pass through corners of said square shape.

5. The gland packing structural material according to claim 4, wherein said elastic yearns (51a,51b) have a higher elasticity than said knitting yarns (41).

6. The gland packing structural material according to claim 1, 2 or 3, wherein said braided cord (8) comprises a plurality of spirally wound braided cord sections (91,92,93) which are of different diameters (D₁, D₂, D₃) and continuous.

7. The gland packing structural material according to claim 4, wherein said gland packing structural material comprises a plurality of spirally wound braided cord sections (91,92,93) which are of different diameters (D₁, D₂, D₃) and continuous.

8. The gland packing structural material according to any preceding claim, wherein said braided cord (8) has an interlock braid structure.

9. The gland packing structural material according to claim 5, wherein said gland packing comprises a continuous spirally wound braided cord of different diameters (D₁,D₂,D₃).

## Patentansprüche

1. Stopfbuchsendichtungs-Strukturmaterial, das eine schraubenlinienförmig gewundene, geflochtene Kordel (8) umfasst, wobei die geflochtene Kordel (8) mehrere Strickgarne (41) und elastische Garne (51c) umfasst, wobei die elastischen Garne (51c), die eine höhere Elastizität als die Strickgarne (41) haben und sich in einer Längsrichtung der geflochtenen Kordel (8) erstrecken, ohne mit den Strickgarnen (41) verwebt zu sein, auf durchdringende Weise angeordnet sind: entweder innerhalb nur eines äußeren Flechtlagenabschnitts (8A) der geflochtenen Kordel (8), wobei der äußere Flechtlagenabschnitt (8A) eine äußere Umfangsflächenseite einer Referenzebene (X-X) ist, die durch ein Querschnittszentrum der geflochtenen Kordel (8) verläuft und zu einer inneren Umfangsfläche (8b) und zu einer äußeren Umfangsfläche (8c) der geflochtenen Kordel (8) parallel ist; oder innerhalb sowohl des äußeren Flechtlagenabschnitts (8A) als auch eines inneren Flechtlagenabschnitts (8B) auf einer inneren Umfangsflächenseite der Referenzebene (X-X), jedoch mit geringerer Flächendichte in dem inneren Flechtlagenabschnitt (8B); oder innerhalb sowohl des äußeren Flechtlagenabschnitts (8A) als auch des inneren Flechtlagenabschnitts (8B) mit der gleichen Flächendichte, jedoch mit elastischen Garnen (51c) in dem inneren Flechtlagenabschnitt (8B), die eine geringere elastische Kraft als jene des äußeren Flechtlagenabschnitts (8A) haben,
wobei der äußere Flechtlagenabschnitt (8A) eine höhere elastische Kraft als der innere Flechtlagenabschnitt (8B) hat.

2. Stopfbuchsendichtungs-Strukturmaterial nach Anspruch 1, wobei die mehreren elastischen Garne (51c) in die geflochtene Kordel (8) so eingebettet sind, dass sie parallel zu einer äußeren Umfangsfläche (8c) der geflochtenen Kordel (8) ausgerichtet sind.

3. Stopfbuchsendichtungs-Strukturmaterial nach Anspruch 2, wobei mehrere Gruppen elastischer Garne, wovon jede mehrere elastische Garne (51c) umfasst, die in der geflochtenen Kordel (8) so angeordnet sind, dass sie auf die äußere Umfangsfläche (8c) der geflochtenen Kordel (8) parallel ausgerichtet sind, in mehreren Ebenen in einer Richtung senkrecht zu der äußeren Umfangsfläche (8c) angeordnet sind.

4. Stopfbuchsendichtungs-Strukturmaterial nach Anspruch 1, 2 oder 3, wobei eine Querschnittsform der geflochtenen Kordel (8) quadratisch ist und elastische Garne (51a, 51b), die sich in der Längsrichtung der geflochtenen Kordel (8) erstrecken, ohne mit den Strickgarnen (41) verwebt zu sein, so angeordnet sind, dass sie durch Ecken der quadratischen Form verlaufen.

5. Stopfbuchsendichtungs-Strukturmaterial nach Anspruch 4, wobei die elastischen Garne (51a, 5 1b) eine höhere Elastizität als die Strickgarne (41) haben.

6. Stopfbuchsendichtungs-Strukturmaterial nach Anspruch 1, 2 oder 3, wobei die geflochtene Kordel (8) mehrere schraubenlinienförmig gewundene geflochtene Kordelabschnitte (91, 92, 93) umfasst, die unterschiedliche Durchmesser (D₁, D₂, D₃) haben und kontinuierlich sind.

7. Stopfbuchsendichtungs-Strukturmaterial nach Anspruch 4, wobei das Stopfbuchsendichtungs-Strukturmaterial mehrere schraubenlinienförmig gewundene, geflochtene Kordelabschnitte (91, 92, 93) hat, die unterschiedliche Durchmesser (D₁, D₂, D₃) besitzen und kontinuierlich sind.

8. Stopfbuchsendichtungs-Strukturmaterial nach einem vorhergehenden Anspruch, wobei die geflochtene Kordel (8) eine ineinander greifende Flechtstruktur hat.

9. Stopfbuchsendichtungs-Strukturmaterial nach Anspruch 5, wobei die Stopfbuchsendichtung eine schraubenlinienförmig gewundene, geflochtene Kordel mit unterschiedlichen Durchmessern (D₁, D₂, D₃) umfasst.

## Revendications

1. Matériau structurel de garniture d'étanchéité, comprenant une corde tressée enroulée en spirale (8), ladite corde tressée (8) comprenant une pluralité de fils à tricoter (41) et de fils élastiques (51c), où lesdits fils élastiques (51c) qui présentent une élasticité supérieure par rapport auxdits fils à tricoter (41) et s'étendent dans le sens de la longueur de ladite corde tressée (8) sans être entremêlés avec lesdits fils à tricoter (41), sont disposés de manière pénétrante soit à l'intérieur uniquement d'une partie de couche de tresse extérieure (8A) de ladite corde tressée (8), ladite partie de couche de tresse extérieure (8A) étant sur le côté de surface périphérique extérieur d'un plan de référence (X-X) qui traverse un centre de coupe transversale de ladite corde tressée (8) et est parallèle aux surfaces périphériques intérieure (8b) et extérieure (8c) de ladite corde tressée (8), soit à l'intérieur à la fois de la partie de couche de tresse extérieure (8A) et d'une partie de couche de tresse intérieure (8B) sur le côté de surface périphérique intérieur du plan de référence (X-X), mais avec une masse surfacique inférieure dans la partie de couche de tresse intérieure (8B), ou bien à l'intérieur à la fois de la partie de couche de tresse extérieure (8A) et de la partie de couche de tresse intérieure (8B) avec la même masse surfacique, mais avec les fils élastiques (51c) de la partie de couche de tresse intérieure (8B) présentant une force élastique inférieure par rapport à ceux dans la partie de couche de tresse extérieure (8A),
où la partie de couche de tresse extérieure (8A) présente une force élastique supérieure par rapport à la partie de couche de tresse intérieure (8B).

2. Matériau structurel de garniture d'étanchéité selon la revendication 1, dans lequel ladite pluralité de fils élastiques (51c) sont incorporés à l'intérieur de ladite corde tressée (8) de façon à être alignés parallèlement à une surface périphérique extérieure (8c) de ladite corde tressée (8).

3. Matériau structurel de garniture d'étanchéité selon la revendication 2, dans lequel une pluralité de groupes de fils élastiques, chacun comprenant une pluralité de fils élastiques (51c) disposés dans ladite corde tressée (8) de façon à être alignés parallèlement à ladite surface périphérique extérieure (8c) de ladite corde tressée (8), sont disposés en une pluralité de niveaux dans une direction perpendiculaire à ladite surface périphérique extérieure (8c).

4. Matériau structurel de garniture d'étanchéité selon la revendication 1, 2 ou 3, dans lequel une forme en coupe transversale de ladite corde tressée (8) est carrée et les fils élastiques (51a, 51b) qui s'étendent dans ledit sens de la longueur de ladite corde tressée (8) sans être entremêlés avec lesdits fils à tricoter (41), sont disposés de façon à traverser les coins de ladite forme carrée.

5. Matériau structurel de garniture d'étanchéité selon la revendication 4, dans lequel lesdits fils élastiques (51a, 51b) présentent une élasticité supérieure par rapport auxdits fils à tricoter (41).

6. Matériau structurel de garniture d'étanchéité selon la revendication 1, 2 ou 3, dans lequel ladite corde tressée (8) comprend une pluralité de sections de corde tressée enroulées en spirale (91, 92, 93) qui sont de diamètres différents (D₁, D₂, D₃) et sont continues.

7. Matériau structurel de garniture d'étanchéité selon la revendication 4, où ledit matériau structurel de garniture d'étanchéité comprend une pluralité de sections de corde tressée enroulées en spirale (91, 92, 93) qui sont de diamètres différents (D₁, D₂, D₃) et sont continues.

8. Matériau structurel de garniture d'étanchéité selon l'une quelconque des revendications précédentes, dans lequel ladite corde tressée (8) présente une structure de tresse de type interlock.

9. Matériau structurel de garniture d'étanchéité selon la revendication 5, dans lequel ladite garniture d'étanchéité comprend une corde tressée enroulée en spirale continue de différents diamètres (D₁, D₂, D₃).
